# EUROPÄISCHE PATENTSCHRIFT

(11) **EP 2 142 611 B1**
(45) Veröffentlichungstag und Bekanntmachung des Hinweises auf die Patenterteilung: **09.08.2017**
(21) Anmeldenummer: 08749094.2
(22) Anmeldetag: 24.04.2008
(51) Int. Cl.: C09D 11/00, C09D 11/02

(54) **KOMPLEXESTER ALS LÖSUNGSMITTEL FÜR DRUCKFARBEN (I)**
COMPLEX ESTERS AS SOLVENT FOR PRINTING INKS (I)
ESTER COMPLEXE UTILISÉ EN TANT QU'AGENT DE DISSOLUTION POUR DES ENCRES D'IMPRIMERIE

(30) Priorität: 03.05.2007 DE 102007021134
(43) Veröffentlichungstag der Anmeldung: 13.01.2010
(73) Patentinhaber: Cognis IP Management GmbH, 40589 Dusseldorf (DE)
(72) Erfinder: BENE, Peter, 50765 Köln (DE); BARO, Juergen, 73732 Esslingen (DE); SCHULTE, Heinz-Günther, 41564 Kaarst (DE)
(74) Vertreter: BASF IP Association
(86) Internationale Anmeldenummer: PCT/EP2008/003295
(87) Internationale Veröffentlichungsnummer: WO 2008/135171

(56) Entgegenhaltungen:
- WO-A-00/32705
- WO-A-2008/024968
- DE-A1- 3 707 020
- US-A- 3 776 867
- US-B1- 6 265 481

## Beschreibung

### Gebiet der Erfindung

Die Erfindung betrifft die Verwendung von speziellen Komplexestern als Lösungsmittel für Druckfarben.

### Stand der Technik

Zur Zeit gibt es geruchs- und geschmacksarme Offsetdruckfarben welche auf Estern von Fettsäuren und einwertigen Alkoholen basieren. Diese Ester haben jedoch aufgrund ihres relativ geringen Molekulargewichts eine mehr oder weniger ausgeprägte Tendenz zur Migration, was man im Verpackungsbereich nach Möglichkeit vermeiden oder zumindest stark minimieren möchte. Der Verpackungsbereich umfaßt dabei als Verpackungsmaterialien nicht nur Kartonagen sondern auch Kunststofffolien diverser chemischer Zusammensetzungen. Ein spezielles Phänomen bei solchen Folien ist das Swelling, das insbesondere bei dünnen Folien von Bedeutung ist. Dabei handelt es sich um eine irreversible Falten- und Wellenbildung im Material. EP 886 671 B1 beschreibt Ester von C₆₋₂₂-Fettsäuren und speziellen mehrwertigen Alkoholen (Trimethylolpropan, Pentaerythrit, Dipentaerythrit, Sorbitol und 2-Butyl-2-ethyl-1,3-propandiol) als Lösungsmittel für Offset-Druckfarben.

WO 2008/024968 claimt Offsetdruckfarben mit Solvens, wobei dieses Solvens ein Triglycerid auf Basis gesättigter Monocarbonsäuren enthält. Bevorzugt sind dann weiter C5-22 und C8-10-Fettsäuren. Die Beispiele basieren auf "capryl/caprate-glycerine ester".

WO 00/32705 betrifft die Kombination von Vinylharz und flüssigen Polyolen, wobei festzuhalten ist, dass Polyole sind keine Fettsäureester sind. Beschrieben werden Zeitungsfarben-Emulsionen, sogenannte single fuid inks.

DE 3707020 betrifft pastenförmige Pigmentpräparationen (auch Flushpasten genannt) mit Pigmenten a) und vier verschiedenen Harzen b) bis e), wobei das Harz b) ein "langöliges Alkydharz" ist. Dabei handelt es sich um ein Öl-modifiziertes Harz und nicht um einen Fettsäureester. Fettsäureester als Lösungsmittel sind nicht offenbart. Von Fettsäureestern ist in DE 3707020 lediglich die Rede als Synthesebaustein für Alkydharze.

US 6265481 betrifft Druckfarben mit speziellen Bindemitteln, wobei die Bindemittel eine Kombination aus einem modifizierten Phenolharz A) und einem Alkydharz B) sind. FS-Ester als Lösungsmittel sind nicht offenbart. Ungesättigte Triglyceride werden reaktiv zu fettsäuremodifizierten Alkydharzen für die chemische Trocknung umgesetzt. Als Lösemittel kommen gemäß US 6265481 Mineralölschnitte zum Einsatz. Von Fettsäureestern ist lediglich die Rede als Synthesebaustein für Alkydharze.

DE 3707020 betrifft Solvens-freie Vehikel für "Heat-Set-Inks". Die Vehikel enthalten OH-gruppen-haltige Triglyceride (etwa castor oil), ein Amino-Cross-Linking-Agent und einen organischen Katalysator. Gemäß Spalte 1, Zeilen 37 ff werden OH-gruppen-haltige Triglyceride (etwa Rizinusöl) in Gegenwart eines aminischen Vernetzers und eines Katalysators vernetzt. Rizinusöl kommt mithin nicht in freier Form als Lösungsmittel zum Einsatz.

### Beschreibung der Erfindung

Es besteht ständiger Bedarf an neuen Lösungsmitteln für Offset-Druckfarben. Wie dem Fachmann bekannt, kommt derartigen Lösungsmitteln die Funktion zu, die in den Offset-Druckfarben enthaltenen Harze zu lösen.

Es war die Aufgabe der vorliegenden Erfindung, Lösungsmittel für Offset-Druckfarben zur Verfügung zu stellen.

Diese Lösungsmittel sollten sich durch möglichst geringe Eigenviskosität auszeichnen. Sie sollten ferner ein ausgezeichnetes Lösevermögen für Festharze, die sich für den Offsetdruck eignen, aufweisen, insbesondere für handelsübliche Offsetdruckfarben-Festharze.

Die auf Basis der Lösemittel herstellbaren Offsetdruckfarben sollten ferner ein gutes Wegschlagverhalten zeigen. Das Wegschlagverhalten ist im Bereich der Druckfarben ein dem Fachmann bekannter branchenüblicher Parameter. Für nähere Ausführungen hierzu sei auf den Beispielteil verwiesen.

Des Weiteren sollten diese Lösungsmittel insbesondere geeignet sein für den Bereich der Lebensmittelverpackungen und sich in dieser Hinsicht vor allem durch geringes Migrations- und Geruchspotential auszeichnen. Sie sollten darüber hinaus swellingarm sein.

Die oben genanten Aufgaben werden in ausgezeichneter Weise gelöst, indem man als Lösungsmittel für Offset-Druckfarben Fettsäureester auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat einsetzt.

Gegenstand der vorliegenden Erfindung ist zunächst die Verwendung von Fettsäureestern auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat als Lösungsmittel für Offset-Druckfarben.

Die erfindungsgemäß einzusetzenden Fettsäureester können Partialester oder Vollester sein. In einer bevorzugten Ausführungsform handelt es sich um Vollester, d.h. sämtliche OH-Gruppen der den Estern zu Grunde liegenden mehrwertigen Alkohole sind vollständig verestert.

Die Fettsäureester können einzeln oder im Gemisch untereinander eingesetzt werden.

In einer Ausführungsform weisen die erfindungsgemäß einzusetzenden Fettsäureester Viskositäten im Bereich von 20 mPas und 500 mPas (gemessen nach DIN 53299; Viskositätsmessung mit Rotationsviskosimeter bei 23° C) und vorzugsweise im Bereich von 20 bis 300 mPas auf.

In einer Ausführungsform weisen die erfindungsgemäß einzusetzenden Fettsäureester Säurezahlen unterhalb von 10 mg KOH/g und insbesondere unterhalb von 5 mg KOH/g auf.

In einer Ausführungsform weisen die erfindungsgemäß einzusetzenden Fettsäureester Jodzahlen zwischen 0 und 150 auf (gemessen nach DIN 53241).

In einer bevorzugten Ausführungsform setzt man solche Fettsäureester ein, deren Firnis-Viskosität im Bereich von 200 bis 3000 mPas, vorzugsweise 300 bis 1500 mPas und insbesondere 300 bis 1000 mPas liegt. Unter Firnis-Viskosität ist dabei die Viskosität zu verstehen, die eine aus 20 Gewichtsteilen des (branchenüblichen) Festharzes Setalin P 7000 (vergleiche den Beispielteil) und 80 Gewichtsteilen des als Lösemittel dienenden Fettsäureesters bestehenden Lösung bei 23 °C aufweist (Messung der Viskosität mittels eines Bohlin Rotationsviskosimeter bei einer Scherrate von 50 s⁻¹).

In einer weiteren bevorzugten Ausführungsform setzt man solche Fettsäureester ein, deren Kauributanol-Wert im Bereich von 25 bis 70 und vorzugsweise im Bereich von 30 bis 50 liegt. Dabei ist die Bestimmung des Kauributanolwerts gemäß ASTM D 1133 durchzuführen, wobei das jeweilige Lösemittel gegen eine gesättigte Lösung eines Kauriharzes ("Kauriharz" der Fa. Lamee, Göttingen) in n-Butanol titriert wird. Der Kauributanolwert ist bei 23 °C zu bestimmen.

In einer weiteren bevorzugten Ausführungsform setzt man solche Fettsäureester ein, deren Molgewicht im Bereich von mindestens 500 und insbesondere von 550 bis 1000 liegt. Ein Wert im Bereich von 550 bis 700 ist ganz besonders bevorzugt.

Beispiele für geeignete Fettsäuren, die den erfindungsgemäßen Fettsäureestern als Fettsäure-Bausteine zu Grunde liegen, sind die gesättigten Fettsäuren Hexansäure (Capronsäure), Heptansäure, Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure, Octadecansäure (Stearinsäure), Nonadecansäure, Eicosansäure (Arachinsäure), Docosansäure (Behensäure) und die ungesättigten Fettsäuren 10-Undecensäure, Lauroleinsäure, Myristoleinsäure, Palmitoleinsäure, Petroselinsäure, Ölsäure, Elaidinsäure, Linolsäure, Linolensäure, Eläostearinsäure, Gadoleinsäure, Arachidonsäure, Erucasäure, Brassidinsäure. Vorzugsweise werden Fettsäuren natürlichen Ursprungs eingesetzt.

In einer Ausführungsform weisen die Fettsäuren, die den erfindungsgemäßen Fettsäureestern als Fettsäure-Bausteine zu Grunde liegen, 8 bis 18 C-Atome auf.

In einer Ausführungsform wählt man die mehrwertigen Alkohole, die den erfindungsgemäßen Fettsäureestern als Alkohol-Bausteine zu Grunde liegen, aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol und 1,3-Cyclohexandimethanol, 1,4-Cyclohexandimethanol.

In einer Ausführungsform wählt man die mehrwertigen Alkohole, die den erfindungsgemäßen Fettsäureestern als Alkohol-Bausteine zu Grunde liegen, aus der Gruppe Neopentylglykol, Ditrimethylolpropan und 1,6-Hexandiol und vorzugsweise aus der Gruppe Neopentylglykol und Di-Trimethylolpropan.

In einer Ausführungsform wählt man die mehrwertigen Alkohole, die den erfindungsgemäßen Fettsäureestern als Alkohol-Bausteine zu Grunde liegen, aus der Gruppe 1,4-Butandiol, Dipropylenglykol, Tripropylenglykol, Triethylenglykol, 1,4-Cyclohexandiol, 2,2,4-Trimethyl-1,3-pentandiol, Hydroxypivalylhydroxypivalat (3-Hydroxy-2,2-dimethylpropyl-3-hydroxy-2,2-dimethylpropanoat) und 1.4-Cyclohexandimethanol.

Ein weiterer Erfindungsgegenstand sind Offset-Druckfarben, die ein oder mehrere Harze und ein oder mehrere Lösungsmittel enthalten, wobei diese Lösungsmittel für das/die Harz(e) Fettsäureester auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat sind.

In einer bevorzugten Ausführungsform setzt man als Harze solche Harze ein, die im Bereich der Offsetdruckfarben handelsüblich sind.

In einer speziellen Ausführungsform enthalten die Offset-Druckfarben ein kolophoniummodifiziertes Phenolharz (A) und/oder ein Maleinatharz (B) und/oder ein modifiziertes Kohlenwasserstoffharz (C) und/oder einen Kolophoniumharzester (D) und als Lösungsmittel für das/die Harz(e) ein oder mehrere Fettsäureester auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat.

In einer bevorzugten Ausführungsform sind die erfindungsgemäßen Offset-Druckfarben vollständig mineralölfrei.

Die erfindungsgemäßen Offset-Druckfarben können über die obligatorischen Bestandteile Harz(e), Lösungsmittel und Farbträger hinaus auch weitere Bestandteile enthalten, insbesondere solche, die dem Fachmann auf diesem Gebiet wohlvertraut sind. Ausdrücklich sei angemerkt, dass Farbträger, insbesondere Pigmente, natürlich obligatorischer Bestandteil von Offset-Druckfarben sind.

Die erfindungsgemäßen Offset-Druckfarben sind vorzugsweise frei von Stoffen mit hohem Migrationspotential. Die in den Bindemitteln der Farben enthaltenen Harze und erfindungsgemäß einzusetzenden Fettsäureester sind so aufeinander abgestimmt, dass der stoffliche Übergang auch im Falle von Primärverpackungen auf Lebensmittel derartig reduziert wird, dass die gesetzlich vorgeschriebenen Grenzwerte deutlich unterschritten werden. Zudem findet bei einem Direktkontakt zwischen der gedruckten Farbe und beispielsweise einer Polypropylenverpackungsfolie durch nahezu vollständiges Ausbleiben eines stofflichen Übergangs nahezu keine Dimensionsveränderung statt, also keine Migration in die Kunststoffmatrix (= kein Folien-Swelling).

Die erfindungsgemäßen Offset-Druckfarben können als geruchsarm, migrationsarm und swellingarm bezeichnet werden und sind daher insbesondere für die Herstellung von Lebensmittelverpackungen unter Verwendung von beispielsweise Karton und Papier geeignet.

### Beispiele

### Eingesetzte Substanzen

| | |
|---|---|
| Setalin P 7000 | Kolophoniumharz (Fa. Akzo Nobel Resins) |
| EW-Print 1169 | mineralölfreies Kokos-Alkydharz (Fa. Cognis Deutschland GmbH) |
| Texaprint SHM 1 EXP | Glycerinester verschiedener Fettsäuren (Fa. Cognis Deutschland GmbH) |
| Irgalite Blau GLVO | Pigment (Fa. Ciba Specialty Chemicals) |

### Herstellung der Rezepturen

### Allgemeines

Von zentraler Bedeutung für die Herstellung von Offset-Druckfarben-Rezepturen sind die Lösungsmittel. Dabei ist das Lösevermögen der Lösungsmittel ein essentieller Parameter. Dieses Lösevermögen wurde durch Bestimmung des dem Fachmann bekannten Kauributanolwertes bestimmt. Diese Prüfmethode ist unter "Verwendete Prüfmethoden" näher angegeben.

Ein weiterer Parameter zur Definition des Lösevermögens von Fettsäurestern ist die Lösungsviskosität von Firnissen (Lösungen von Festharzen in den Lösungsmitteln). Die hierbei eingesetzte Prüfmethode ist unter "Verwendete Prüfmethoden" näher angegeben.

Schließlich ist es wichtig, dass die Offsetdruckfarbe gute Werte bezüglich des dem Fachmann bekannten und branchenüblichen Wegschlagtests aufweist. Hierzu wurden die Offset-Druckfarben durch Bestimmung des sogenannten Wegschlagverhaltens charakterisiert. Diese Prüfmethode ist unter "Verwendete Prüfmethoden" näher angegeben.

### Zu den Rezepturen

Die Herstellung von Offset-Druckfarben-Rezepturen erfolgte in zwei Schritten.

Zunächst (Schritt 1) wurden 20 Gewichtsteile des Festharzes Setalin P 7000 mit 80 Gewichtsteilen des jeweils zu untersuchenden Lösungsmittels versetzt und unter Rühren auf 180-200 °C erhitzt. Dabei wurde eine Lösung des Festharzes im jeweiligen Lösungsmittel erhalten. Diese Lösung wird - gemäß fachüblicher Gepflogenheit - als Firnis bezeichnet.

Die Firnisse wurden durch Bestimmung ihrer Viskosität charakterisiert. Die hierbei eingesetzte Prüfmethode ist unter "Verwendete Prüfmethoden" näher angegeben.

Schließlich wurden (Schritt 2) die Offsetfarbrezepturen wie folgt hergestellt: Ein Teil des Firnis wurde mit dem (mineralölfreien) Alkydharz EW-Print 1169 gemischt. Anschliessend wurde das Pigment Irgalite Blau GLVO eingerührt. Die Mischung wurde über eine Dreiwalze dispergiert. Das so erhaltene Farbkonzentrat wurde mit einem Rest Firnis versetzt und zur Einstellung der gewünschten Endviskosität der Offset-druckfarbe nochmals das dem Firnis zu Grunde liegende Lösungsmittel zugegeben.

Den Tabellen der Beispiele B1 bis B3 sowie des Vergleichsbeispiels V1 ist jeweils zu entnehmen:
- die Zusammensetzung der Firnisse (Gew.-% der einzelnen Bestandteile bezogen auf den gesamten Firnis)
- die Endzusammensetzung der Offsetdruckfarben (Gew.-% der einzelnen Bestandteile bezogen auf die gesamte Offsetdruckfarbe).

### Verwendete Prüfmethoden

### 1) Lösungsvermögen

Der sogenannte Kauributanol-Wert wird von Experten häufig benutzt um das Lösevermögen für Druckfarbenharze zu bestimmen. Der Kauributanol Wert charakterisiert dabei das Lösevermögen der Lösungsmittel.

Dementsprechend erfolgte die Bestimmung des Lösevermögens durch Messung des Kauributanolwerts gemäß ASTM D 1133. Zur Bestimmung des Kauributanol-Wertes wurde das jeweilige Lösemittel gegen eine gesättigte Lösung eines Kauriharzes ("Kauriharz" der Fa. Lamee, Göttingen) in n-Butanol titriert. Der Kauributanolwert wurde bei 23 °C bestimmt.

**Typische Kauributanol Werte sind:**

| | |
|---|---|
| aromatenfreie Mineralöle | ca 20 |
| aromatentreiche Mineralöle | ca 40-50 |
| Toluol | ca 105-110 |

### 2) Lösungsviskosität

Die Viskositätsbestimmung erfolgte gemäß der dem Fachmann bekannten Eurocommitmethode. Dafür wurden 20 Gew.-Teile des Harzes Setalin P 7000 mit 80 Gew.-Teilen der jeweiligen Lösemittelkomponente gemischt, durch Erhitzen auf 180-200°C unter Rühren wurde das Harz gelöst. Anschließend wurde die Lösung (derartige Lösungen werden vom Fachmann als Firnis bezeichnet) auf 23 °C abgekühlt. Danach wurden die Viskositäten der einzelnen Firnisse mit Hilfe eines Bohlin Rotationsviskosimeters ermittelt. Die Werte wurden dabei bei einer Scherrate von 50 s⁻¹ bei 23°C gemessen.

### 3) Klebfreiheit bedruckter Oberflächen: Wegschlagtest

Zur weiteren Charakterisierung der der Offset-Druckfarben wurde der so genannte Wegschlagtest durchgeführt.

Zum Prinzip des Tests sei folgendes ausgeführt: Es geht darum zu prüfen, wie lange es dauert, bis ein Farbfilm nach dem Druckende im Stapel oder in der Rolle klebfrei wird, ein Vorgang, der sich prinzipiell innerhalb von Sekunden über Minuten abspielen kann, der jedoch auch einige Stunden dauern kann, je nach Farbe und Substrat. Beim Wegschlagen trennen sich die Lösemittel von den festen bzw. pastösen Farbbestandteilen, die als fester Farbfilm auf der Substratoberfläche zurückbleiben. Mithin gelangen bei der Durchführung des hier in Rede stehende Test die in der Offsetdruckfarbe vorhandenen Lösemittel in das Innere des Substrats (= das zu bedruckende Material), sie werden "weggeschlagen". Je schneller ein Farbfilm klebfrei wird, d. h. je schneller die Lösemittel in das Substrat wegschlagen, desto schneller kann auch gedruckt werden, da dann keine Gefahr besteht, dass im Papierstapel oder in der Papierrolle unter Druck noch frische Farbe von der bedruckten Vorderseite auf die unbedruckte Rückseite abschmiert bzw. ablegt.

Zur konkreten Durchführung des Wegschlagtests wurden 1,5 g/m² der jeweils hergestellten Offsetdruckfarbe mit Hilfe eines Offsetdruckandruckgeräts der Fa. Prüfbau auf gestrichenen Karton (GD-2 (280g/cm³)) angedruckt. Direkt im Anschluß wurde ein weiteres Papier (APCO II/II (150 g/cm³)) gegen den bedruckten Karton gepresst. Dabei wurde der Anpressdruck jeweils nach 30s, 60 s, 120 s und 240 s gelöst.

Nun zeigte sich auf dem Substrat im Konterdruck je nach Anpresszeit eine mehr oder weniger starke Färbung des Kartons, welche abhängig ist von Wegschlagen des Lösemittels in das Substrat.

Die Intensität der Färbung (Farbdichte) auf dem Karton wurde mit einem Farbmeßgerät gemessen und ist ein Indiz für das Wegschlagverhalten eines Lösemittels in den Karton. Je höher die Farbintensität (Praxiswerte liegen dabei zwischen 0 und 2,5), desto langsamer erfolgte das Wegschlagen des Lösungsmittels. Die beim Wegschlagtest ermittelten Werte sind dimensionslose Zahlen. Je geringer der Wert ist, desto mehr Lösungsmittel wurde ins Innere des Substrates weggeschlagen und desto besser ist mithin die Klebfreiheit der bedruckten Oberfläche.

### Beispielrezepturen

### Beispiel 1: Vergleichsbeispiel (V1)

Die Herstellung von Firnis und Offset-Druckfarbe erfolgte wie oben beschrieben.

Die Zusammensetzung von Firnis und Offset-Druckfarben ist der folgenden Tabelle zu entnehmen. Dabei erfolgen die Angaben - hier wie auch in den folgenden Beispielen - jeweils in Gewichtsteilen bezogen auf den gesamten Firnis bzw. die gesamte Offsetdruckfarbe:

| **Firnis** | | **Offsetdruckfarbe** | |
|---|---|---|---|
| Setalin P 7000 | 20 | Setalin P 7000 | 14,8 |
| Pentaerythrittetraoctoat | 80 | EW-Print 1169 | 8 |
| | | Pentaerythrittetraoctoat | 59,2 |
| | | Irgalite Blau GLVO | 18 |

### Messdaten (gemäß den oben beschriebenen Prüfmethoden):

- Viskosität von Pentaerythrittetraoctoat: 41 mPas
- Molgewicht von Pentaerythrittetraoctoat: 641
- Viskosität des Firnis: 1280 mPas
- Lösevermögen von Pentaerythrittetraoctoat (Kauributanolwert): 40
- Wegschlagtest der Offsetdruckfarbe:
   0,85 (bei 30 s), 0,70 (bei 60 s), 0,28 (bei 120 s), 0,06 (bei 240 s)

### Beispiel 2: erfindungsgemäßes Beispiel (B1)

Die Herstellung von Firnis und Offset-Druckfarbe erfolgte wie oben beschrieben.

Die Zusammensetzung von Firnis und Offset-Druckfarben ist der folgenden Tabelle zu entnehmen:

| **Firnis** | | **Offsetdruckfarbe** | |
|---|---|---|---|
| Setalin P 7000 | 20 | Setalin P 7000 | 14,8 |
| Neopentylglykoldioleat | 80 | EW-Print 1169 | 8 |
| | | Neopentylglykoldioleat | 59,2 |
| | | Irgalite Blau GLVO | 18 |

### Messdaten (gemäß den oben beschriebenen Prüfmethoden):

- Viskosität von Neopentylglykoldioleat: 35 mPas
- Molgewicht von Neopentylglykoldioleat: 621
- Viskosität des Firnis: 640 mPas
- Lösevermögen von Neopentylglykoldioleat (Kauributanolwert): 31
- Wegschlagtest der Offsetdruckfarbe:
   0,71 (bei 30 s), 0,25 (bei 60 s), 0,05 (bei 120 s), 0,01 (bei 240 s)

### Beispiel 3: erfindungsgemäßes Beispiel (B2)

Die Herstellung von Firnis und Offset-Druckfarbe erfolgte wie oben beschrieben.

Die Zusammensetzung von Firnis und Offset-Druckfarben ist der folgenden Tabelle zu entnehmen:

| **Firnis** | | **Offsetdruckfarbe** | |
|---|---|---|---|
| Setalin P 7000 | 20 | Setalin P 7000 | 14,8 |
| Neopentylglykoldicocoat | 80 | EW-Print 1169 | 8 |
| | | Neopentylglykoldicocoat | 59,2 |
| | | Irgalite Blau GLVO | 18 |

### Messdaten (gemäß den oben beschriebenen Prüfmethoden):

- Viskosität von Neopentylglykoldicocoat: 25 mPas
- Molgewicht von Neopentylglykoldicocoat: 580
- Viskosität des Firnis: 360 mPas
- Lösevermögen von Neopentylglykoldicocoat (Kauributanolwert): 38
- Wegschlagtest der Offsetdruckfarbe:
   0,55 (bei 30 s), 0,21 (bei 60 s), 0,03 (bei 120 s), 0,00 (bei 240 s)

### Beispiel 4: erfindungsgemäßes Beispiel (B3)

Die Herstellung von Firnis und Offset-Druckfarbe erfolgte wie oben beschrieben.

Die Zusammensetzung von Firnis und Offset-Druckfarben ist der folgenden Tabelle zu entnehmen.

| **Firnis** | | **Offsetdruckfarbe** | |
|---|---|---|---|
| Setalin P 7000 | 20 | Setalin P 7000 | 14,8 |
| Texaprint SHM 1 EXP | 80 | EW-Print 1169 | 8 |
| | | Texaprint SHM 1 EXP | 59,2 |
| | | Irgalite Blau GLVO | 18 |

### Messdaten (gemäß den oben beschriebenen Prüfmethoden):

- Viskosität von Texaprint SHM 1 EXP: 34 mPas
- Molgewicht von Texaprint SHM 1 EXP: 580
- Viskosität des Firnis: 500 mPas
- Lösevermögen von Texaprint SHM 1 EXP (Kauributanolwert): 47
- Wegschlagtest der Offsetdruckfarbe:
   0,85 (bei 30 s), 0,65 (bei 60 s), 0,22 (bei 120 s), 0,04 (bei 240 s)

### Übersicht der Messdaten

Die oben bereits angegebenen Messdaten sind der besseren Übersicht halber nachfolgend noch einmal in Tabellenform zusammengestellt:

**Lösungsviskositäten der Firnisse**

| siehe Beispiel | Firnis auf Basis des Lösungsmittels | Viskosität |
|---|---|---|
| V1 | Pentaerythrittetraoctoat | 1280 mPas |
| B1 | Neopentylglykoldioleat | 640 mPas |
| B2 | Neopentylglykoldicocoat | 360 mPas |
| B3 | Glycerinester diverser Fettsäuren | 500 mPas |

**Lösungsvermögen der Lösungsmittel**

| Lösungsmittel | Kauributanolwert |
|---|---|
| Pentaerythrittetraoctoat: | 40 |
| Neopentylglykoldioleat | 31 |
| Neopentylglykoldicocoat | 38 |
| Glycerinester diverser Fettsäuren | 47 |

**Wegschlagverhalten der Offsetdruckfarben (Wegschlagtest)**

| Offsetdruckfarbe gemäß Beispiel | in der Offsetdruckfarbe enthaltenes Lösungsmittel | Ergebnis des Wegschlagtests | | | |
|---|---|---|---|---|---|
| | | 30 s | 60 s | 120 s | 240 s |
| V1 | Pentaerythrittetraoctoat | 0,85 | 0,70 | 0,28 | 0,06 |
| B1 | Neopentylglykoldioleat | 0,71 | 0,25 | 0,05 | 0,01 |
| B2 | Neopentyglycoldicocoat | 0,55 | 0,21 | 0,03 | 0,00 |
| B3 | Glycerinester div. Fettsäuren | 0,85 | 0,65 | 0,22 | 0,04 |

## Patentansprüche

1. Verwendung von Fettsäureestern auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat als Lösungsmittel für Offset-Druckfarben.

2. Verwendung nach Anspruch 1, wobei es sich bei den Fettsäureestern um Vollester handelt.

3. Verwendung nach Anspruch 1 oder 2, wobei man als Fettsäurebaustein der Ester native Fettsäuren mit 8 bis 18 C-Atomen einsetzt.

4. Offset-Druckfarben, enthaltend ein oder mehrere Harze und ein oder mehrere Lösungsmittel, **dadurch gekennzeichnet, dass** die Lösungsmittel für das/die Harz(e) Fettsäureester auf Basis von C₆₋₂₆-Fettsäuren und mehrwertigen Alkoholen aus der Gruppe 1,2-Propylenglykol, Dipropylenglykol, Tripropylenglykol, Triethylenglykol, Ditrimethylolpropan, Neopentylglykol, 2-Methylpropan-1,3-diol, 1,4-Butandiol, 1,6-Hexandiol, 1,4-Cyclohexandiol, 2-Methylpentan-2,4-diol, 2-Ethylhexan-1,3-diol, 2,2,4-Trimethyl-1,3-pentandiol, 1,3-Cyclohexandimethanol, 1,4-Cyclohexandimethanol und Hydroxypivalylhydroxypivalat sind.

5. Offset-Druckfarben nach Anspruch 3, wobei die Druckfarben als Harze ein kolophoniummodifiziertes Phenolharz (A) und/oder ein Maleinatharz (B) und/oder ein modifiziertes Kohlenwasserstoffharz (C) und/oder einen Kolophoniumharzester (D) enthalten.

6. Offset-Druckfarben nach Anspruch 4 oder 5, wobei es sich bei den Fettsäureestern um Vollester handelt.

## Claims

1. The use of fatty acid esters based on C₆₋₂₆-fatty acids and polyhydric alcohols from the group consisting of 1,2-propylene glycol, dipropylene glycol, tripropylene glycol, triethylene glycol, ditrimethylolpropane, neopentyl glycol, 2-methylpropane-1,3-diol, 1,4-butanediol, 1,6-hexanediol, 1,4-cyclohexanediol, 2-methylpentane-2,4-diol, 2-ethylhexane-1,3-diol, 2,2,4-trimethyl-1,3-pentanediol, 1,3-cyclohexanedimethanol, 1,4-cyclohexanedimethanol and hydroxypivalyl hydroxypivalate, as solvents for offset printing inks.

2. The use according to claim 1, the fatty acid esters being full esters.

3. The use according to claim 1 or 2, natural fatty acids having 8 to 18 C atoms being used as fatty acid building blocks of the esters.

4. An offset printing ink comprising one or more resins and one or more solvents, wherein the solvents for the resin(s) are fatty acid esters based on C₆₋₂₆-fatty acids and polyhydric alcohols from the group consisting of 1,2-propylene glycol, dipropylene glycol, tripropylene glycol, triethylene glycol, ditrimethylolpropane, neopentyl glycol, 2-methylpropane-1,3-diol, 1,4-butanediol, 1,6-hexanediol, 1,4-cyclohexanediol, 2-methylpentane-2,4-diol, 2-ethylhexane-1,3-diol, 2,2,4-trimethyl-1,3-pentanediol, 1,3-cyclohexanedimethanol, 1,4-cyclohexanedimethanol and hydroxypivalyl hydroxypivalate.

5. The offset printing ink according to claim 3, the printing ink comprising, as resins, a rosin-modified phenol resin (A) and/or a maleate resin (B) and/or a modified hydrocarbon resin (C) and/or a rosin ester (D).

6. The offset printing ink according to claim 4 or 5, the fatty acid esters being full esters.

## Revendications

1. Utilisation d'esters d'acides gras à base d'acides gras en C₆₋₂₆ et d'alcools polyvalents du groupe constitué par le 1,2-propylène glycol, le dipropylène glycol, le tripropylène glycol, le triéthylène glycol, le ditriméthylolpropane, le néopentylglycol, le 2-méthylpropane-1,3-diol, le 1,4-butanediol, le 1,6-hexanediol, le 1,4-cyclohexanediol, le 2-méthylpentane-2,4-diol, le 2-éthylhexane-1,3-diol, le 2,2,4-triméthyl-1,3-pentanediol, le 1,3-cyclohexanediméthanol, le 1,4-cyclohexanediméthanol et l'hydroxypivalate d'hydroxy-pivalyle en tant que solvant pour encres d'impression offset.

2. Utilisation selon la revendication 1, dans laquelle les esters d'acides gras sont des esters entiers.

3. Utilisation selon la revendication 1 ou 2, dans laquelle des acides gras naturels de 8 à 18 atomes C sont utilisés en tant que constituant acide gras des esters.

4. Encres d'impression offset, contenant une ou plusieurs résines et un ou plusieurs solvants, **caractérisées en ce que** les solvants pour la/les résines sont des esters d'acides gras à base d'acides gras en C₆₋₂₆ et d'alcools polyvalents du groupe constitué par le 1,2-propylène glycol, le dipropylène glycol, le tripropylène glycol, le triéthylène glycol, le ditriméthylolpropane, le néopentylglycol, le 2-méthylpropane-1,3-diol, le 1,4-butanediol, le 1,6-hexanediol, le 1,4-cyclohexanediol, le 2-méthylpentane-2,4-diol, le 2-éthylhexane-1,3-diol, le 2,2,4-triméthyl-1,3-pentanediol, le 1,3-cyclohexanediméthanol, le 1,4-cyclohexanediméthanol et l'hydroxypivalate d'hydroxypivalyle.

5. Encres d'impression offset selon la revendication 3, dans lesquelles les encres d'impression contiennent en tant que résines une résine de phénol modifiée par du colophane (A) et/ou une résine de maléinate (B) et/ou une résine hydrocarbonée modifiée (C) et/ou un ester de résine de colophane (D).

6. Encres d'impression offset selon la revendication 4 ou 5, dans lesquelles les esters d'acides gras sont des esters entiers.
